# EUROPEAN PATENT APPLICATION

(11) **EP 4 557 485 A1**
(43) Date of publication of application: **21.05.2025**
(21) Application number: 24759768.5
(22) Date of filing: 23.02.2024
(51) Int. Cl.: H01M 50/342, H01M 50/533, H01M 50/543, H01M 50/474, H01M 50/186, H01M 50/593

(54) **BATTERY**

(30) Priority: 23.02.2023 CN 202320300904 U
(71) Applicant: SVOLT Energy Technology Co., Ltd., Changzhou, Jiangsu 213200 (CN)
(72) Inventor: YUAN, Yue, hangzhou, Jiangsu 213200 (CN); XIA, Tianjun, hangzhou, Jiangsu 213200 (CN); GONG, Weihong, hangzhou, Jiangsu 213200 (CN); LIU, Youjian, hangzhou, Jiangsu 213200 (CN)
(74) Representative: M. Zardi & Co S.A.
(86) International application number: PCT/CN2024/078325
(87) International publication number: WO 2024/175094

(57) **Abstract**

Provided is a battery (1), which comprises: a case (10), a post terminal (11), and a pole group (12). A first side of the case (10) is provided with a first explosion-proof structure (100) extending annularly, a part of the first side of the case (10) located on an inner circumferential side of the first explosion-proof structure (100) is a first separable portion (101), and the first separable portion (101) covers a pressure relief opening (106) of the case (10). The post terminal (11) is arranged on the first separable portion (101) on the first side of the case (10). The pole group (12) is arranged in the case (10), and a side of the pole group (12) adjacent to the post terminal (11) is connected to a connecting piece (13). The connecting piece (13) comprises a connecting portion (130) and a second separable portion (131). The connecting portion (130) is connected to the pole group (12), and the second separable portion (131) is separable from the connecting portion (130) to expose a through opening (135) in the connecting portion (130). The post terminal (11) is connected to the second separable portion (131). When the pressure in the case (10) is greater than a preset pressure value, the first explosion-proof structure (100) breaks, and the second separable portion (131) becomes separated from the connecting portion (130) and moves outwards, which drives the post terminal (11) and the first separable portion (101) to move to expose the pressure relief opening (106).

## Description

### CROSS REFERENCE TO RELATED APPLICATIONS

The present application claims priority of Chinese patent application 202320300904.0, filed with the Chinese Patent Office on February 23, 2023 and entitled "Battery", which is hereby incorporated by reference in its entirety.

### TECHNICAL FIELD

The present application relates to the field of batteries, in particular to a battery.

### BACKGROUND

In related technologies, a case is provided with a scored structure as an explosion-proof structure. When the pressure in the case is greater than a preset pressure value, the explosion-proof structure is prone to break due to its weak structure, and the pressure is relieved through a gap formed where the explosion-proof structure breaks. However, this pressure relief method results in insufficient pressure relief from the battery, which poses a safety hazard.

### SUMMARY OF THE INVENTION

The present application is intended to at least solve one of technical problems in the prior art. To this end, an object of the present application is to propose a battery in which, by providing a second separable portion on a connecting piece, when the pressure inside a case is greater than a preset pressure value, the second separable portion can drive a post terminal and a first separable portion to move, so as to expose a pressure relief opening, allowing sufficient pressure relief from the interior of the battery, and improving the safety of the battery.

The battery according to embodiments of the present application includes: a case having a first side and a second side that are opposite to each other, wherein the first side of the case is provided with a first explosion-proof structure extending annularly, and a part of the first side of the case located on an inner circumferential side of the first explosion-proof structure is a first separable portion, and the first separable portion covers a pressure relief opening of the case; a post terminal arranged on the first separable portion on the first side of the case; and a pole group arranged in the case, wherein a side of the pole group adjacent to the post terminal is connected to a connecting piece; the connecting piece includes a connecting portion and a second separable portion; the connecting portion is connected to the pole group, and the second separable portion is separable from the connecting portion to expose a through opening in the connecting portion; and the post terminal is connected to the second separable portion, wherein, when the pressure in the case is greater than a preset pressure value, the first explosion-proof structure breaks, and the second separable portion becomes separated from the connecting portion and moves outwards, which drives the post terminal and the first separable portion to move to expose the pressure relief opening.

For the battery according to embodiments of the present application, by providing the second separable portion on the connecting piece, when the pressure in the case is greater than a preset pressure value, the second separable portion can drive the post terminal and the first separable portion to move, so as to expose the pressure relief opening, allowing sufficient pressure relief from the interior of the battery, and improving the safety of the battery.

According to some embodiments of the present application, an annular second explosion-proof structure is formed on the connecting piece, a part of the connecting piece located on an inner circumferential side of the second explosion-proof structure forms the second separable portion, and at least a part of the connecting piece located on an outer circumferential side of the second explosion-proof structure forms the connecting portion; and/or a projection of the second separable portion on a reference plane is located within a projection of the first separable portion on the reference plane, the reference plane being perpendicular to an axial direction of the case.

According to some embodiments of the present application, the battery further includes a support member, wherein the support member is an insulating member. The support member is disposed between the connecting portion and the case and surrounds an outer circumferential side of the second separable portion; and the support member is connected to the connecting portion, and the support member abuts against an inner wall of the case in an axial direction of the case.

According to some optional embodiments of the present application, in the axial direction of the case, a part of the support member is opposite to the first explosion-proof structure, and the support member is formed with a venting structure, which is opposite to the first explosion-proof structure.

According to some optional embodiments of the present application, one of the support member and the connecting portion is formed with a positioning groove, and the other thereof is formed with a positioning rib, the positioning rib being accommodated in the positioning groove.

According to some optional embodiments of the present application, the support member includes a support member body and a support protrusion structure; and in the axial direction of the case, the support protrusion structure is provided on a side of the support member body facing the connecting portion, and a surface of an opposite side of the support member body facing an inner wall of the case is formed as a support surface, the support protrusion structure being connected to or abutting against the connecting portion, and the support surface abutting against the inner wall of the case.

According to some optional embodiments of the present application, the support protrusion structure includes a plurality of support protrusions arranged to be spaced apart in a radial direction of the support member body, each support protrusion being in the form of an annulus extending in a circumferential direction of the support member body; and/or the support member further includes a limiting protrusion provided on the support member body, the limiting protrusion being located on an outer circumferential side of the support protrusion structure, and a gap is formed between an outer circumferential side of the pole group and an inner circumferential wall of the case, the limiting protrusion being accommodated in the gap.

According to some embodiments of the present application, the battery further includes a sealing insulation structure, which includes a first sealing insulation member, a second sealing insulation member, and a third sealing insulation member, wherein the first separable portion is formed with a mounting hole, through which the post terminal extends, and the first sealing insulation member is located between an inner circumferential wall of the mounting hole and the post terminal; the second sealing insulation member is connected to a side of the first sealing insulation member adjacent to the pole group, and the second sealing insulation member is located between an inner wall of the case and the post terminal; the third sealing insulation member is connected to an opposite side of the first sealing insulation member away from the pole group, and the third sealing insulation member is located between an outer wall of the case and the post terminal; and at least two of the first sealing insulation member, the second sealing insulation member, and third sealing insulation member are formed integrally; and/or a liquid injection hole is formed on the second side of the case, and a blocking member is provided at the liquid injection hole to block the liquid injection hole.

According to some embodiments of the present application, the post terminal is a positive post terminal; the case includes a main case and a negative pole cover plate, with the first explosion-proof structure being formed on the first side of the main case, the negative pole cover plate covering the second side of the main case, the negative pole cover plate being electrically connected to the pole group, wherein the negative pole cover plate is directly welded to the pole group.

According to some optional embodiments of the present application, the negative pole cover plate is formed with a first recessed portion and a second recessed portion that are both recessed inwardly, wherein the first recessed portion is located in the middle of the negative pole cover plate, and the second recessed portion surrounds an outer circumferential side of the first recessed portion and is spaced apart from the first recessed portion; the first recessed portion is formed with a liquid injection hole, and a blocking member is provided at the liquid injection hole to block the liquid injection hole; and the second recessed portion is directly welded to the pole group.

Additional aspects and advantages of the present application will be provided in part in the following description, and part of them will become apparent from the following description, or be learned through practice of the present application.

### BRIEF DESCRIPTION OF THE DRAWINGS

The above and/or additional aspects and advantages of the present application will become apparent and easy to understand from the description of the embodiments in conjunction with the following accompanying drawings, in which:
Fig. 1 is a cross-sectional view of a battery according to some embodiments of the present application;
Fig. 2 is a perspective view of the battery in Fig. 1;
Fig. 3 is a perspective view of a connecting piece of the battery in Fig. 1;
Fig. 4 is a top view of a support member of the battery in Fig. 1;
Fig. 5 is a cross-sectional view of the support member in Fig. 4;
Fig. 6 is a bottom view of the support member in Fig. 4; and
Fig. 7 is a cross-sectional view of a negative pole cover plate of the battery in Fig. 1.

### Reference numerals:

1. battery;
10, case; 100, first explosion-proof structure; 101, first separable portion; 102, main case;
103, negative pole cover plate; 104, first recessed portion; 105, second recessed portion;
106, pressure relief opening; 107, mounting hole; 108, first bulge;
11. post terminal;
12. pole group;
13, connecting piece; 130, connecting portion; 131, second separable portion; 132, connecting protrusion; 133, second explosion-proof structure; 134, positioning rib; 135, through opening;
14, support member; 140, support member body; 141, support surface; 142, support protrusion; 143, positioning groove;
144, venting structure; 145, vent hole;
146, limiting protrusion;
15, sealing insulation member; 150, first sealing insulation member; 151, second sealing insulation member; 152, third sealing insulation member;
16, liquid injection hole; 17, blocking member; 18, sealing cover plate.

### DETAILED DESCRIPTION

Embodiments of the present application are described in detail below, with examples of the embodiments shown in the drawings, in which same or similar reference numerals throughout represent same or similar elements or elements having same or similar functions. The embodiments described below with reference to the drawings are exemplary and are intended only to explain the present application and should not to be construed as limiting the present application.

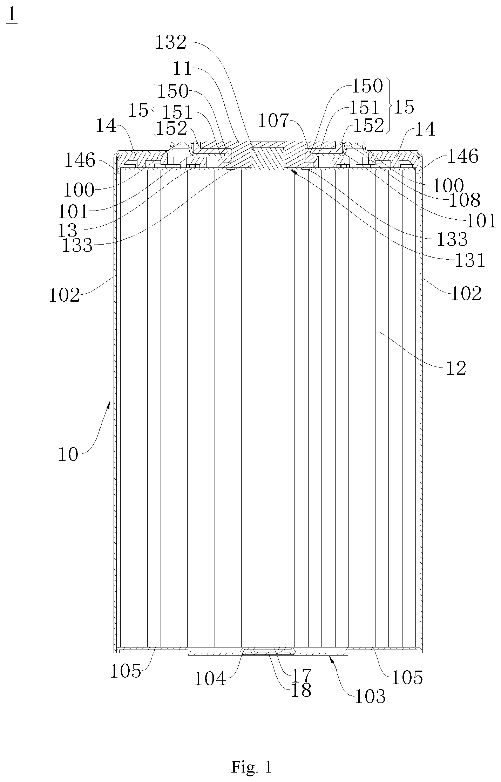

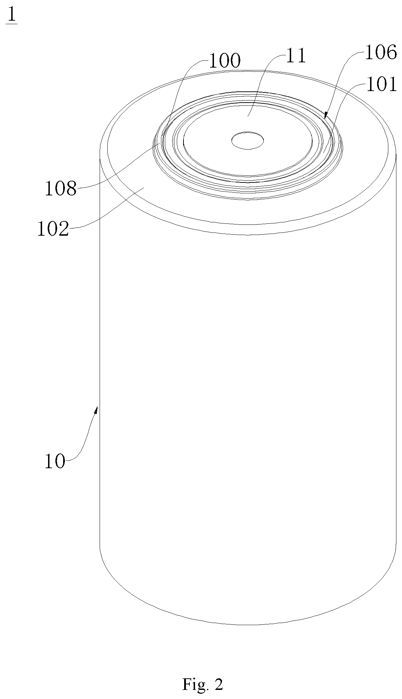

A battery 1 according to embodiments of the present application is described below with reference to Figs. 1 to 7.

As shown in Figs. 1 to 3, the battery 1 according to embodiments of the present application includes a case 10, a post terminal 11, and a pole group 12. The case 10 has a first side and a second side that are opposite to each other. The first side of the case 10 is provided with a first explosion-proof structure 100 extending annularly, and a part of the first side of the case 10 located on an inner circumferential side of the first explosion-proof structure 100 is a first separable portion 101. The first separable portion 101 covers a pressure relief opening 106 of the case 10. The post terminal 11 is arranged on the first separable portion 101 on the first side of the case 10. The pole group 12 is arranged in the case 10. A side of the pole group 12 adjacent to the post terminal 11 is connected to a connecting piece 13. The connecting piece 13 includes a connecting portion 130 and a second separable portion 131. The connecting portion 130 is connected to the pole group 12. For example, the connection between the connecting portion 130 and the pole group 12 may be achieved by laser welding. Laser welding has a fast welding speed and results in minimal deformation during a welding process, allowing welding of micro-elements, thereby enabling high-speed welding and high-precision welding, facilitating the connection between the connecting portion 130 and the pole group 12, and providing a good welding effect. The second separable portion 131 is separable from the connecting portion 130 to expose a through opening 135 in the connecting portion 130. The post terminal 11 is connected to the second separable portion 131. For example, a connecting protrusion 132 is formed on the second separable portion 131 at a position connected with the post terminal 11, and the post terminal 11 is connected to the connecting protrusion 132 of the second separable portion 131. The connection between the post terminal 11 and the connecting protrusion 132 may be achieved by welding. In this configuration, connecting the connecting portion 130 to the pole group 12 enables electrical connection between the pole group 12 and the connecting portion 130; and connecting the post terminal 11 to the second separable portion 131 enables electrical connection between the pole group 12 and the post terminal 11 through the connecting piece 13.

When the pressure in the case 10 is greater than a preset pressure value, under the action of the pressure in the case 10, the first explosion-proof structure 100 breaks due to the weakness at the first explosion-proof structure 100, and the second separable portion 131 becomes separated from the connecting portion 130 and moves outwards (the word "outwards" means a direction away from the center of the case 10) under the action of the pressure in the case 10, and drives the post terminal 11 and the first separable portion 101 to move to expose the pressure relief opening 106, such that gas inside the case 10 is discharged via the through opening 135 and out of the pressure relief opening 106. This can achieve sufficient pressure relief from the interior of the battery 1, and can improve the safety of the battery 1.

Optionally, the battery 1 may be a cylindrical battery 1. For example, the case 10 may be made of steel.

Optionally, a first bulge 108 is formed on the first side of the case 10. The first bulge 108 is formed as an annulus around the post terminal 11. The explosion-proof structure is formed on the first bulge 108.

For the battery according to embodiments of the present application, by providing the second separable portion 131 on the connecting piece 13, when the pressure in the case 10 is greater than a preset pressure value, the second separable portion 131 can drive the post terminal 11 and the first separable portion 101 to move, so that the pressure relief opening 106 can be exposed, allowing sufficient pressure relief from the interior of the battery 1, and improving the safety of the battery 1.

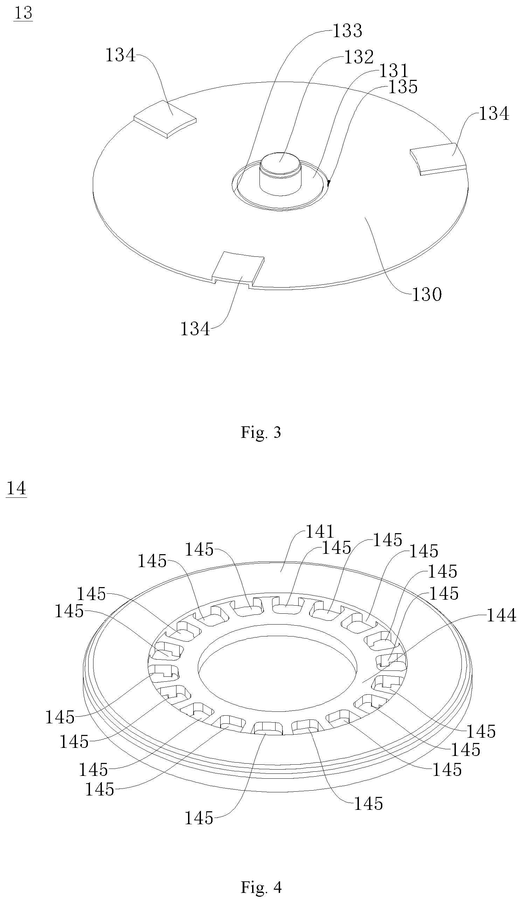

According to some embodiments of the present application, referring to Fig. 3, an annular second explosion-proof structure 133 is formed on the connecting piece 13. For example, the first explosion-proof structure 100 and the second explosion-proof structure 133 are both scored structures, which makes the first explosion-proof structure 100 and the second explosion-proof structure 133 simple in structure, and facilitates processing and manufacturing. A part of the connecting piece 13 located on an inner circumferential side of the second explosion-proof structure 133 forms the second separable portion 131, and at least a part of the connecting piece 13 located on an outer circumferential side of the second explosion-proof structure 133 forms the connecting portion 130. For example, a part of the connecting piece 13 located on an outer circumferential side of the second explosion-proof structure 133 forms the connecting portion 130. As another example, all of the connecting piece 13 located on an outer circumferential side of the second explosion-proof structure 133 forms the connecting portion 130.

According to some optional embodiments of the present application, referring to Fig. 1, a projection of the second separable portion 131 on a reference plane is located within a projection of the first separable portion 101 on the reference plane. The reference plane is perpendicular to an axial direction of the case 10. When the pressure in the case 10 is greater than a preset pressure value, under the action of the pressure in the case 10, the second explosion-proof structure 133 breaks due to the weakness at the second explosion-proof structure 133, and the second separable portion 131 becomes separated from the connecting portion 130 under the action of the pressure in the case 10. In this configuration, after the second separable portion 131 becomes separated from the connecting portion 130, the second separable portion 131 can drive the post terminal 11 to move from the first separable portion 101 to the outside of the case 10, allowing the pressure inside the battery 1 to be relieved more thoroughly, and improving the safety of the battery 1.

According to some embodiments of the present application, referring to Fig. 1, the battery 1 further includes a support member 14. The support member 14 is an insulating member. The support member 14 is disposed between the connecting portion 130 and the case 10, and the support member 14 surrounds an outer circumferential side of the second separable portion 131. This configuration can prevent electric conduction between the case 10 and the connecting portion 130 when the case 10 is charged, thereby avoiding short-circuiting of the battery 1. The support member 14 is connected to the connecting portion 130, and the support member 14 abuts against an inner wall of the case 10 in an axial direction of the case 10. The support member 14 can function to limit the position of the connecting portion 130. When the pressure in the case 10 is greater than a preset pressure value, the position of the connecting portion 130 can be limited by the support member 14, and thus the connecting portion 130 can be prevented from deforming during separation of the second separable portion 131 from the connecting portion 130. This can ensure normal connection between the connecting portion 130 and the pole group 12, and facilitates the separation of the second separable portion 131 from the connecting portion 130, so that gas inside the battery 1 can be discharged via the through opening 135 and out of the pressure relief opening 106 to the outside of the battery 1, thereby achieving pressure relief from the interior of the battery 1, and improving the safety of the battery 1.

According to some optional embodiments of the present application, referring to Figs. 1 and 4, in the axial direction of the case 10, a part of the support member 14 is opposite to the first explosion-proof structure 100. The support member 14 is formed with a venting structure 144. The venting structure 144 is opposite to the first explosion-proof structure 100. This configuration allows for gas discharge from the interior of the battery 1, enabling gas inside the battery 1 to be discharged via the venting structure 144 and out of the first explosion-proof structure 100 to the outside of the battery 1.

Optionally, referring to Fig. 4, the venting structure 144 includes a plurality of vent holes 145 spaced apart in a circumferential direction of the support member 14, and the venting structure 144 is located on an outer circumferential side of the above-described second explosion-proof structure 133 and spaced apart from the second explosion-proof structure 133.

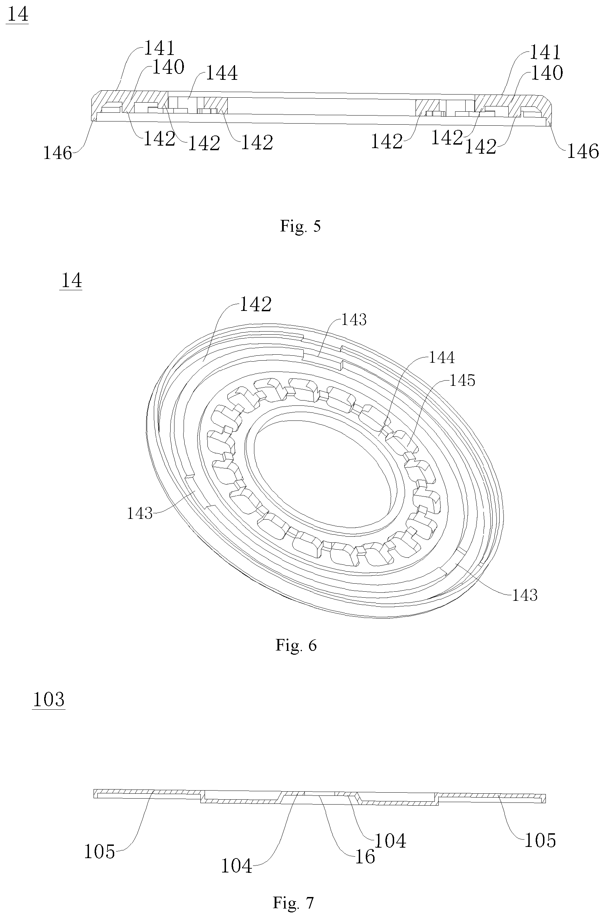

According to some optional embodiments of the present application, referring to Figs. 3 and 6, one of the support member 14 and the connecting portion 130 is formed with a positioning groove 143, and the other thereof is formed with a positioning rib 134. The positioning rib 134 is accommodated in the positioning groove143. For example, if the support member 14 is formed with a positioning groove 143, then the connecting portion 130 is formed with a positioning rib 134. As another example, if the support member 14 is formed with a positioning rib 134, then the connecting portion 130 is formed with a positioning groove 143. This configuration achieves positioning of the support member 14 during installation thereof, allowing the support member 14 to be conveniently installed on the connecting piece 13, thereby improving production efficiency.

A plurality of positioning grooves 143 and a plurality of positioning ribs 134 may be provided. The number of the positioning grooves 143 and the number of the positioning ribs 134 may be the same, and they are in one-to-one correspondence, respectively. The plurality of positioning grooves 143 are spaced apart in the circumferential direction of the support member 14, and the plurality of positioning ribs 134 are spaced apart in a circumferential direction of the connecting portion 130. For example, three positioning grooves 143 are spaced apart in the circumferential direction of the support member 14, and three positioning ribs 134 are spaced apart in the circumferential direction of the connecting portion 130. The three positioning ribs 134 respectively correspond to the three positioning grooves 143, and the three positioning ribs 134 are respectively accommodated in the three positioning grooves 143. Providing the connecting portion 130 with the positioning ribs 134 can increase the structural strength of the connecting portion 130, and reduce deformation of the connecting portion 130 during separation of the second separable portion 131 from the connecting portion 130, thereby ensuring a stable connection between the connecting portion 130 and the pole group 12.

According to some optional embodiments of the present application, referring to Figs. 1 and 5, the support member 14 includes a support member 14 body and a support protrusion 142 structure. In the axial direction of the case 10, the support protrusion 142 structure is provided on a side of the support member 14 body facing the connecting portion 130, and a surface of an opposite side of the support member 14 body facing an inner wall of the case 10 is formed as a support surface 141. The support protrusion 142 structure is connected to or abuts against the connecting portion 130, and the support surface 141 abuts against the inner wall of the case 10. Configuring the support protrusion 142 structure to be connected to or abut against the connecting portion 130 can provide better support for the case 10 and a stronger position-limiting effect on the connecting portion 130, and can save materials and reduce production costs. The support surface 141 enables a better match with the shape of the inner wall of the case 10, and can increase friction between the case 10 and the support surface 141, making the connection between the support surface 141 and the case 10 more stable. The configuration in which the support member 14 is located between the connecting portion 130 and the case 10 allows it to remain in abutment with the case 10, and can provide a stronger position-limiting effect on the connecting portion 130.

According to some optional embodiments of the present application, referring to Fig. 6, the support protrusion 142 structure includes a plurality of support protrusions 142 arranged to be spaced apart in a radial direction of the support member 14 body. Each support protrusion 142 is in the form of an annulus extending in a circumferential direction of the support member 14 body. This configuration allows forces on the support member 14 in all directions to be more uniform, and can provide better support for the case 10 and a stronger position-limiting effect on the connecting portion 130.

According to some optional embodiments of the present application, referring to Figs. 1 and 5, the support member 14 further includes a limiting protrusion 146 provided on the support member 14 body. The limiting protrusion 146 is located on an outer circumferential side of the support protrusion 142 structure. A gap is formed between an outer circumferential side of the pole group 12 and an inner circumferential wall of the case 10. The limiting protrusion 146 is accommodated in the gap. During assembly, the pole group 12 undergoes some expansion, causing a shift in the position of the pole group 12 inside the case 10. Accommodating the limiting protrusion 146 in the gap can reduce the shift of the pole group 12 inside the case 10.

According to some optional embodiments of the present application, referring to Figs. 1, 5, and 6, the support protrusion 142 structure includes a plurality of support protrusions 142 arranged to be spaced apart in a radial direction of the support member 14 body. Each support protrusion 142 is in the form of an annulus extending in a circumferential direction of the support member 14 body. The support member 14 further includes a limiting protrusion 146 provided on the support member 14 body. The limiting protrusion 146 is located on an outer circumferential side of the support protrusion 142 structure. A gap is formed between an outer circumferential side of the pole group 12 and an inner circumferential wall of the case 10. The limiting protrusion 146 is accommodated in the gap. This configuration allows forces on the support member 14 in all directions to be more uniform, and can provide support for the case 10 and a stronger position-limiting effect on the connecting portion 130. Accommodating the limiting protrusion 146 in the gap can reduce the shift of the pole group 12 inside the case 10.

According to some embodiments of the present application, referring to Fig. 1, the battery 1 further includes a sealing insulation structure, which includes a first sealing insulation member 150, a second sealing insulation member 151, and a third sealing insulation member 152. The first separable portion 101 is formed with a mounting hole 107. The post terminal 11 extends through the mounting hole 107. The first sealing insulation member 150 is located between an inner circumferential wall of the mounting hole 107 and the post terminal 11. The first sealing insulation member 150 can insulate the inner circumferential wall of the mounting hole 107 from the post terminal 11, and can seal a gap between the mounting hole 107 and the post terminal 11. The second sealing insulation member 151 is connected to a side of the first sealing insulation member 150 adjacent to the pole group 12, and the second sealing insulation member 151 is located between an inner wall of the case 10 and the post terminal 11. The second sealing insulation member 151 can insulate the inner wall of the case 10 from the post terminal 11, and function to support and protect the case 10 and the post terminal 11, and can seal a gap between the inner wall of the case 10 and the post terminal 11. The third sealing insulation member 152 is connected to an opposite side of the first sealing insulation member 150 away from the pole group 12, and the third sealing insulation member 152 is located between an outer wall of the case 10 and the post terminal 11. The third sealing insulation member 152 can insulate the outer wall of the case 10 from the post terminal 11, and function to fix and protect the post terminal 11, and can seal a gap between the outer wall of the case 10 and the post terminal 11.

The sealing insulation structure integrates sealing and insulating functions into a single component. It can prevent electric conduction between the case 10 and the post terminal 11 when the case 10 is electrically charged, ensure the electric connection between the post terminal 11 and the connecting piece 13 is not affected by the case 10, and prevent short-circuiting of the battery 1; meanwhile, it can seal the gap between the case 10 and the post terminal 11, and prevent external foreign matters, such as dust, from entering the interior of the battery 1, thereby ensuring normal operation of the battery 1.

At least two of the first sealing insulation member 150, the second sealing insulation member 151, and third sealing insulation member 152 are formed integrally. For example, the first sealing insulation member 150 and the second sealing insulation member 151 are formed integrally. As another example, the first sealing insulation member 150 and the third sealing insulation member 152 are formed integrally. As a further example, the first sealing insulation member 150, the second sealing insulation member 151, and the third sealing insulation member 152 are formed integrally. Originally, there could be three components for sealing and insulation between the post terminal 11 and the case 10. This configuration in which at least two of the three sealing insulation members 15 between the post terminal 11 and the case 10 are formed integrally reduces the number of components, and assembly procedures, and improves production efficiency.

According to some embodiments of the present application, referring to Figs. 1 and 7, a liquid injection hole 16 is formed on the second side of the case 10, and a blocking member 17 is provided at the liquid injection hole 16 to block the liquid injection hole 16. The first explosion-proof structure 100 on the case 10 is located on the first side of the case 10, while the liquid injection hole 16 is provided on the second side of the case 10, so that an electrolyte can be injected through the liquid injection hole 16 into the interior of the battery 1. This configuration can prevent the electrolyte from contaminating the explosion-proof structure during liquid injection, resulting in fracturing of the explosion-proof structure due to corrosion by the electrolyte, and thus can prevent the battery 1 from leaking the electrolyte. The liquid injection hole 16 is blocked with the blocking member 17 after the liquid injection is completed. For example, the blocking member 17 may be a sealing plug. For example, the blocking member 17 may be made of rubber. The blocking member 17 can seal the liquid injection hole 16 to prevent the battery 1 from leaking the electrolyte.

According to some embodiments of the present application, referring to Fig. 1, the post terminal 11 is a positive post terminal 11. The case 10 includes a main case 102 and a negative pole cover plate 103. The first explosion-proof structure 100 is formed on the first side of the main case 102. The negative pole cover plate 103 covers the second side of the main case 102. The negative pole cover plate 103 is electrically connected to the pole group 12. The negative pole cover plate 103 is directly welded to the pole group 12. In this configuration, a negative pole connecting piece 13 between the negative pole cover plate 103 and the pole group 12 is eliminated. Instead, the negative pole cover plate 103 is directly welded to the pole group 12 to achieve electric connection between the negative pole cover plate 103 and the pole group 12. This can reduce the number of components, and eliminates an assembly procedure of welding the negative pole connecting piece 13 to the post terminal 11, thereby simplifying an assembly process and improving production efficiency.

According to some optional embodiments of the present application, referring to Figs. 1 and 7, the negative pole cover plate 103 is formed with a first recessed portion 104 and a second recessed portion 105 that are both recessed inwardly. The first recessed portion 104 is located in the middle of the negative pole cover plate 103, and the second recessed portion 105 surrounds an outer circumferential side of the first recessed portion 104 and is spaced apart from the first recessed portion 104. The first recessed portion 104 is formed with a liquid injection hole 16, and a blocking member 17 is provided at the liquid injection hole 16 to block the liquid injection hole 16. The second recessed portion 105 is directly welded to the pole group 12. For example, the connection between the second recessed portion 105 and the pole group 12 may be achieved by laser penetration welding. Laser penetration welding has a fast welding speed, allowing welding of micro-elements, thereby enabling high-speed welding and high-precision welding, facilitating the connection between the second recessed portion 105 and the pole group 12, and providing a good welding effect. This configuration can prevent an electrolyte from contaminating the second recessed portion 105 during liquid injection into the battery 1, and avoid corrosion of the second recessed portion 105 by the electrolyte, thereby ensuring normal connection between the second recessed portion 105 and the pole group 12.

Optionally, a sealing cover plate 18 is further provided at the first recessed portion 104. The sealing cover plate 18 is located below the blocking member 17. The sealing cover plate 18 is connected to the first recessed portion 104 by welding. The sealing cover plate 18 can function to seal and limit the blocking member 17, preventing the blocking member 17 from detaching from the liquid injection hole 16, can provide additional sealing for the liquid injection hole 16, and enables a better sealing effect of the blocking member 17. An outer circumferential wall of the second recessed portion 105 of the negative pole cover plate 103 is connected to the main case 102. For example, the connection between the outer circumferential wall of the second recessed portion 105 and the main case 102 may be achieved by peripheral welding, which enables convenient connection of the negative pole cover plate 103 to the main case 102 while ensuring a good welding effect.

In description of this specification, description with reference to terms such as "an embodiment", "some embodiments", "illustrative embodiment", "example", "specific example", or "some examples" means that a specific feature, structure, material or characteristic described in conjunction with the embodiment or example is included in at least one embodiment or example of the present application. In this specification, illustrative expressions of the above terms do not necessarily refer to the same embodiment or example. Moreover, the specific feature, structure, material or characteristic described may be combined in a suitable manner in any one or more embodiments or examples.

Although embodiments of the present application have been shown and described, those of ordinary skill in the art may understand that various changes, modifications, substitutions and variations can be made to these embodiments without departing from the principle and purpose of the present application, and the scope of the present application is defined by the claims and equivalents thereof.

## Claims

1. A battery, comprising:
a case having a first side and a second side that are opposite to each other, wherein the first side of the case is provided with a first explosion-proof structure extending annularly, and a part of the first side of the case located on an inner circumferential side of the first explosion-proof structure is a first separable portion, and the first separable portion covers a pressure relief opening of the case;
a post terminal arranged on the first separable portion on the first side of the case; and
a pole group arranged in the case, wherein a side of the pole group adjacent to the post terminal is connected to a connecting piece; the connecting piece comprises a connecting portion and a second separable portion; the connecting portion is connected to the pole group, and the second separable portion is separable from the connecting portion to expose a through opening in the connecting portion; and the post terminal is connected to the second separable portion,
wherein, when the pressure in the case is greater than a preset pressure value, the first explosion-proof structure breaks, and the second separable portion becomes separated from the connecting portion and moves outwards, which drives the post terminal and the first separable portion to move to expose the pressure relief opening.

2. The battery according to claim 1, wherein an annular second explosion-proof structure is formed on the connecting piece, a part of the connecting piece located on an inner circumferential side of the second explosion-proof structure forms the second separable portion, and at least a part of the connecting piece located on an outer circumferential side of the second explosion-proof structure forms the connecting portion; and/or a projection of the second separable portion on a reference plane is located within a projection of the first separable portion on the reference plane, the reference plane being perpendicular to an axial direction of the case.

3. The battery according to claim 1, further comprising a support member, wherein the support member is an insulating member; the support member is disposed between the connecting portion and the case and surrounds an outer circumferential side of the second separable portion; and the support member is connected to the connecting portion, and the support member abuts against an inner wall of the case in an axial direction of the case.

4. The battery according to claim 3, wherein, in the axial direction of the case, a part of the support member is opposite to the first explosion-proof structure, and the support member is formed with a venting structure, which is opposite to the first explosion-proof structure.

5. The battery according to claim 3, wherein one of the support member and the connecting portion is formed with a positioning groove, and the other thereof is formed with a positioning rib, the positioning rib being accommodated in the positioning groove.

6. The battery according to claim 3, wherein the support member comprises a support member body and a support protrusion structure; and in the axial direction of the case, the support protrusion structure is provided on a side of the support member body facing the connecting portion, and a surface of an opposite side of the support member body facing an inner wall of the case is formed as a support surface, the support protrusion structure being connected to or abutting against the connecting portion, and the support surface abutting against the inner wall of the case.

7. The battery according to claim 6, wherein the support protrusion structure comprises a plurality of support protrusions arranged to be spaced apart in a radial direction of the support member body, each support protrusion being in the form of an annulus extending in a circumferential direction of the support member body; and/or the support member further comprises a limiting protrusion provided on the support member body, the limiting protrusion being located on an outer circumferential side of the support protrusion structure, and a gap is formed between an outer circumferential side of the pole group and an inner circumferential wall of the case, the limiting protrusion being accommodated in the gap.

8. The battery according to claim 1, further comprising a sealing insulation structure, which comprises a first sealing insulation member, a second sealing insulation member, and a third sealing insulation member, wherein the first separable portion is formed with a mounting hole, through which the post terminal extends, and the first sealing insulation member is located between an inner circumferential wall of the mounting hole and the post terminal; the second sealing insulation member is connected to a side of the first sealing insulation member adjacent to the pole group, and the second sealing insulation member is located between an inner wall of the case and the post terminal; the third sealing insulation member is connected to an opposite side of the first sealing insulation member away from the pole group, and the third sealing insulation member is located between an outer wall of the case and the post terminal; and at least two of the first sealing insulation member, the second sealing insulation member, and third sealing insulation member are formed integrally; and/or a liquid injection hole is formed on the second side of the case, and a blocking member is provided at the liquid injection hole to block the liquid injection hole.

9. The battery according to claim 1, wherein the post terminal is a positive post terminal; the case comprises a main case and a negative pole cover plate, with the first explosion-proof structure being formed on the first side of the main case, the negative pole cover plate covering the second side of the main case, the negative pole cover plate being electrically connected to the pole group, wherein the negative pole cover plate is directly welded to the pole group.

10. The battery according to claim 9, wherein the negative pole cover plate is formed with a first recessed portion and a second recessed portion that are both recessed inwardly, wherein the first recessed portion is located in the middle of the negative pole cover plate, and the second recessed portion surrounds an outer circumferential side of the first recessed portion and is spaced apart from the first recessed portion; the first recessed portion is formed with a liquid injection hole, and a blocking member is provided at the liquid injection hole to block the liquid injection hole; and the second recessed portion is directly welded to the pole group.
